# EUROPÄISCHE PATENTSCHRIFT

(11) **EP 1 958 477 B1**
(45) Veröffentlichungstag und Bekanntmachung des Hinweises auf die Patenterteilung: **26.12.2018**
(21) Anmeldenummer: 06819510.6
(22) Anmeldetag: 15.11.2006
(51) Int. Cl.: H04W 36/00

(54) **VERFAHREN ZUR VORBEREITUNG EINER VERBINDUNGSWEITERSCHALTUNG IN EINEM FUNK-KOMMUNIKATIONSSYSTEM**
HANDOFF PREPARATION METHOD IN A WIRELESS COMMUNICATION SYSTEM
PROCEDE DE PREPARATION D'UN TRANSFERT DE CONNEXION DANS UN SYSTEME DE COMMUNICATION RADIO

(30) Priorität: 30.11.2005 DE 102005057098
(43) Veröffentlichungstag der Anmeldung: 20.08.2008
(73) Patentinhaber: Nokia Siemens Networks GmbH & Co. KG, 81541 München (DE)
(72) Erfinder: BREUER, Volker, 16727 Bötzow (DE)
(74) Vertreter: Cohausz & Florack
(86) Internationale Anmeldenummer: PCT/EP2006/068503
(87) Internationale Veröffentlichungsnummer: WO 2007/062983

(56) Entgegenhaltungen:
- WO-A-01/41492
- WO-A1-00/38349
- US-B1- 6 603 751
- "Universal Mobile Telecommunications System (UMTS), 3GPP TS 25.215, V6.4.0 (2005-09), 3rd Generation Partnership Project; Technical Specification Group Radio Access Network; Physical layer - Measurements (FDD) (Release 6)" ETSI STANDARDS, EUROPEAN TELECOMMUNICATIONS STANDARDS INSTITUTE, SOPHIA-ANTIPO, FR, Bd. 3-R1, Nr. V640, September 2005 (2005-09), XP014032564 ISSN: 0000-0001

## Beschreibung

Die Erfindung bezieht sich auf ein Verfahren zur Vorbereitung einer Verbindungsweiterschaltung in einem Funk-Kommunikationssystem, insbesondere in einem Mobilfunksystem. Außerdem bezieht sich die Erfindung auf eine Zugangseinrichtung, eine Teilnehmerstation sowie ein Funk-Kommunikationssystem mit jeweils Mitteln zum Durchführen eines solchen Verfahrens.

Einer der wichtigsten Aspekte für mobile Kommunikationssysteme ist die Mobilitäts- bzw. Dienste-Kontinuität. Mobile Kommunikationssysteme gemäß GSM (Global System for Mobile Communication) oder WCDMA (Wideband Code Division Multiple Access) bzw. UMTS (Universal Mobile Telecommunications System) bieten eine vollständige Mobilität, sofern eine entsprechende räumliche Abdeckung mit Netzzugangseinrichtungen gewährleistet ist. Hingegen bieten Systeme gemäß WLAN (Wireless Local Area Network/Funkgestütztes lokales Datennetz) nur nomadische Mobilität, was bedeutet, dass in diesen Systemen eine dedizierte Ressource nicht existiert bzw. nicht beibehalten wird, während sich eine über dieses System kommunizierende Teilnehmerstation aus dem Bereich der Funkzelle des lokalen Datennetz herausbewegt.

Bei den erstgenannten Systemen mit dem Konzept vollständiger Mobilität ist es erforderlich, dass die Teilnehmerstationen während der Kommunikation in einer Funkzelle Messungen von Ressourcen in benachbarten Zellen durchführen oder sogar Messungen in Zellen anderer Systeme durchführen, wenn ein entsprechender Dienst empfangen wird. Dies dient dazu, rechtzeitig vor dem Verlassen der aktuell versorgenden Zelle eine entsprechende neue Verbindung über eine andere Zelle oder eine andere Ressource aufzubauen. Das Messen wird in verschiedenen Systemen auf verschiedene Art und Weise durchgeführt, wobei keines der Konzepte für derzeit in Entwicklung befindliche Erweiterungen des UMTS-Standards, auch unter dem Begriff 3G+ bekannt, geeignet ist. Diese Erweiterungen basieren auf beispielsweise einer Erhöhung der nutzbaren Bandbreite. Im Vergleich zu den aktuell eingesetzten UMTS-Netzen, in denen Frequenzbänder mit 5MHz Frequenzbreite vorgesehen sind, sind für 3G+ Frequenzbreiten bis 20MHz vorgesehen, ggf. unterteilt in mehrere Unterfrequenzbreiten von beispielsweise 1,25MHz oder 5MHz. Teilnehmerendgeräte werden dabei abhängig von ihrer technischen Ausstattung unterschiedliche Frequenzbandbreiten unterstützen können.

GSM ist ein auf TDMA (Time Division Multiple Access) beruhendes System auf Basis der Zuweisung dedizierter Ressourcen im Zeitbereich in aufwärts- bzw. abwärtsgerichteter Verbindungsrichtung (UL: UpLink, DL: DownLink). Zwischen dem Empfang von Daten zu den entsprechenden diskreten Zeitmomenten kann die Teilnehmerstation Messungen durchführen. Außerdem bietet GSM eine so genannte Super- und Hyper-Frame-Struktur, welche auch so genannten Multi-Slot-Terminals, das heißt Endeinrichtungen mit der Fähigkeit, auf mehreren Zeitscheiben gleichzeitig zu empfangen, einen nahezu kontinuierlichen Empfang ermöglicht, um Messungen innerhalb gewisser vordefinierter Zeitmomente durchzuführen.

UMTS hingegen ist ein FDD-System (Frequency Division Duplex), bei dem der Teilnehmerstation kontinuierlich dedizierte Ressourcen in Aufwärtsrichtung und in Abwärtsrichtung in Form von Frequenz-Kanälen zugewiesen werden. Um Messungen ohne einen Datenverlust durchzuführen, wurde ein komprimierter Modus eingeführt, der so genannte Compressed Mode. Während kurzer Zeitintervalle, so genannter Compressed Mode Gaps, wird die Übertragung von Daten in Aufwärtsrichtung und/oder in Abwärtsrichtung unterbrochen, was der Teilnehmerstation die Möglichkeit bietet, Messungen durchzuführen. Um nicht irgendwelche Daten bei der Übertragung vor und nach der Übertragungslücke im komprimierten Modus zu verlieren, findet eine Erhöhung der Datenrate durch eine Reduzierung des Spreizfaktors statt.

In den verschiedenen mobilen Kommunikationssystemen wird entsprechend eine ausreichende Zeit zum Durchführen von Messungen auf anderen Ressourcen als den momentan benutzten Ressourcen zur Verfügung gestellt, wobei neben den beschriebenen Verfahren weitere Verfahren bekannt sind. Bei diesen wird beispielsweise ein Verlust einer gewissen Datenmenge in Kauf genommen, d.h. die Teilnehmerstation führt Messungen durch, während die Übertragung von Daten zu ihr weiter durchgeführt wird, und verliert so einige Daten, wobei derart verlorene Daten durch eine Codierung in höheren Schichten kompensiert werden oder eine erneute Übertragung der Daten erforderlich wird. Bekannt ist weiterhin, den Verlust der Daten mit Blick auf eine reduzierte Wiedergabe-Qualität im Fall z.B. übertragener Sprache in Kauf zu nehmen. Außerdem besteht die Möglichkeit, in den Terminals bzw. Teilnehmerstationen eine duale Receiver-Ausstattung vorzusehen, so dass über eine erste Empfänger-Einrichtung ein Datenempfang kontinuierlich durchgeführt wird, während eine zweite Empfänger-Einrichtung die Messungen auf anderen Ressourcen durchführt.

Die Evolution des UMTS-Standards (nachfolgend als 3G+ bezeichnet) soll als ein mobiles Kommunikationssystem in Art eines Mobilfunksystems eine vollständige Mobilität bieten, wobei zunächst Anforderungen festgelegt wurden, die den Einsatz dualer Receiver verbindlich vorsehen. Dies jedoch würde nachteilig zu erhöhten Kosten der Teilnehmerendgeräte sowie einer höheren technischen Komplexität führen. Ein Einsatz von Teilnehmerstationen mit nur einem Empfänger ist daher wahrscheinlich, sodass für derartige Endgeräte Verfahren definiert werden müssen, die eine Unterstützung von Verbindungsweiterschaltungen frequenzbandübergreifend ermöglichen Dabei gilt es, Messungen auf verschiedenen Frequenzen zu ermöglichen, ohne dabei einen Datenverlust während der Zeit der Messung in Kauf nehmen zu müssen.

Darüber hinaus besteht bei 3G+ das Problem, dass es sich um ein System mit rein paketorientierter Datenübertragung handelt, welches die Planung der Übertragung von Datenpaketen im Vergleich zu so genannten leitungsvermittelten Verbindungen (engl. Circuit Switched) komplizierter macht, da es große Möglichkeiten hinsichtlich des Zelldurchsatzes aufgrund von Planungs-Algorithmen bieten soll, wozu Ansätze gemäß Maximum-Throughput, Round-Robin etc. verwendet werden. 2G und 3G sind Systeme, welche auf Leitungsvermittlung beruhen und somit ein grundsätzlich anderes Konzept unterstützen als 3G+, welches als paket-orientiertes System konzipiert ist. Bei den leitungsvermittelten Systemen existieren auch paketorientierte (packet switched) Komponenten wie HSDPA (High Speed Downlink Paket Access/Hochgeschwindigkeits-Paketzugriff in Abwärtsrichtung) und EDCH (Enhanced Dedicated CHannel/Verbesserter dedizierter Kanal), jedoch handelt es sich dabei lediglich um Zusatzoptionen, um den Durchsatz zu verbessern. Dies ist ersichtlich durch die Anforderungen, dass ein dedizierter Kanal zwingend neben dem Paketkanal zu existieren hat. 3G+ hat jedoch ausschließlich einen reinen Paketkanal zur Datenübertragung oder dedizierten Datenübertragung, sodass die derzeit verwendeten Verfahren zum Bereitstellen von Übertragungs- bzw. Empfangslücken für Messungen nicht geeignet sind, da sie auf dedizierten Kanälen beruhen und darauf bezogen sind. Zur Durchführung von Messungen auf anderen Ressourcen sind daher stets aktive dedizierte Steuerkanäle erforderlich und die Teilnehmerstation hat kontinuierlich die so genannten Scheduling Channels (Planungskanäle) für die paket-orientierten Übertragungen zu überwachen.

WO 01/41492 A1 diskutiert Verfahren zum Einfügen von Messlücken in eine drahtlose Verbindung zwischen einem Sender und einem Empfänger eines WCDMA-Systems, in dem die komplette Steuerung des "compressed mode" Betriebs in WCDMA durch das Netzwerk und alternativ hierzu durch das Endgerät erfolgt.

3GPP TS 25.215 V6.4.0 (2005-09) beschreibt Einzelheiten des komprimierten Modus (compressed mode) entsprechend der damaligen Spezifikation in 3GPP.

WO 00/38349 diskutiert Verfahren und Vorrichtungen eines Telekommunikationssystems, das die Anwendung des komprimierten Modus (compressed mode) mit einer Steuerung der Übertragungsleistungen kombiniert und offenbart, dass beim "compressed mode" Betrieb die Verkürzung eines Senderahmens durch die Erhöhung der Sendeleistung ausgeglichen wird.

Die Aufgabe der Erfindung besteht darin, ein Verfahren zum Durchführen eines Monitorings benachbarter Ressourcen vorzuschlagen, welches insbesondere auch den Einsatz von Teilnehmerstationen mit nur einer Empfänger-Einrichtung ermöglicht, ohne den Verlust von zu empfangenden Datenpaketen in Kauf nehmen zu müssen. Außerdem sollen entsprechende netzseitige Zugangseinrichtungen und Teilnehmerstationen zum Durchführen eines solchen Verfahrens vorgeschlagen werden.

Diese Aufgabe wird durch ein Verfahren sowie Systemkomponenten gemäß den Merkmalen der unabhängigen Patentansprüche gelöst. Vorteilhafte Ausgestaltungen sind Gegenstand abhängiger Patentansprüche.

Bevorzugt wird demgemäß ein Verfahren zum Durchführen eines Intra-System-Frequenz-Monitorings, eines Inter-Frequenz-Monitorings und/oder eines Inter-System-Monitorings in einem Mobilfunksystem mit rein paket-orientierten Funkverbindungen zwischen einer Teilnehmerstation und einer Zugangseinrichtung, bei dem die Teilnehmerstation zwischen dem Empfangen von Datenpaketen innerhalb eines ersten Frequenzbereichs Messungen innerhalb eines anderen Frequenzbereichs als dem ersten Frequenzbereich durchführt oder in einem anderen System als dem Empfangssystem durchführt, die Teilnehmerstation der Zugangseinrichtung einen Bedarf zum Durchführen von Messungen signalisiert, die Zugangseinrichtung daraufhin der Teilnehmerstation eine Mess-Signalisierung sendet und die Teilnehmerstation aufgrund der Mess-Signalisierung Messungen nachfolgend ohne Verlust von zu empfangenden Datenpaketen durchführt.

Dabei stellt die Teilnehmerstation für das Inter-Frequenz-Monitoring oder das Inter-System-Monitoring gemäß einer ersten Ausführungsform deren Empfängereinrichtung für eine begrenzte Zeitdauer auf eine andere Frequenz ein, welche zum Empfang der Daten über die erste Frequenz nicht geeignet ist. Die Teilnehmerstation signalisiert den Bedarf indirekt implizit durch Mitteilung einer Empfangs-Qualität an die Zugangseinrichtung und die Zugangseinrichtung entscheidet bei zu niedriger Empfangsqualität einen Bedarf und überträgt dann die Mess-Signalisierung. Die Zugangseinrichtung geht nach Übertragung der Mess-Signalisierung für eine begrenzte Zeitdauer in einen festgelegten Zeitbereichs-Planungs-Modus über und signalisiert dies mit der Mess-Signalisierung an die Teilnehmerstation, wobei Datenpakete mit zueinander verschiedenen Daten in einem für die Messung ausreichend großen zeitlichen Abstand übertragen werden. Dabei werden die Datenpakete mit gleichen Daten wiederholt gesendet, solange ein den Datenpaketen zugeordnetes Indikator-Flag dies signalisiert und/oder verschiedene Datenpakete mit zueinander verschiedenen Daten mit jeweils ausreichend großem zeitlichen Abstand übertragen werden.

Die Zugangseinrichtung erhöht eine Sendeleistung für zumindest ein Datenpaket zum Reduzieren der Wahrscheinlichkeit einer erforderlichen erneuten Übertragung, insbesondere im Fall einer durch die Teilnehmerstation signalisierten aufwändigen Messung. Ein Datenpaket kann zusätzlich als Kopie parallel über einen anderen Sub-Träger, insbesondere über eine andere Frequenz übertragen werden. Die Zugangseinrichtung kann der Teilnehmerstation eine Zeitdauer zwischen der Übertragung zweier aufeinander folgender Datenpakete mit zueinander verschiedenen Daten signalisieren.

Gemäß einer zweiten Ausführungsform führt die Teilnehmerstation Messungen in einem Empfangs-Frequenzband mit dem ersten Frequenzbereich durch, welcher schmaler ist als ein Sende-Frequenzband mit einem Basis-Frequenzbereich, in welchem die Messung durchzuführen wäre. Die Teilnehmerstation kann Messungen über Pilotsignale durchführen, welche im Sende-Frequenzband verteilt sind, wobei jedoch ein die benachbarte Zelle identifizierbar machender Kanal außerhalb des ersten Frequenzbereichs liegt, wobei die Teilnehmerstation der Zugangseinrichtung eine Empfangsleistung eines solchen Pilotsignals signalisiert, so dass die Zugangseinrichtung einen Bedarf einer Messung ermitteln kann.

Falls die Teilnehmerstation einen eine benachbarte Zelle identifizierbar machenden Kanal nicht in ihrem ersten Frequenzbereich empfangen kann, signalisiert sie dies der Zugangseinrichtung signalisiert, woraufhin der Teilnehmerstation von der oder über die Zugangseinrichtung ein zweiter Frequenzbereich als neuer Frequenzbereich zugewiesen wird, so dass die Teilnehmerstation nachfolgend Messungen in einem geänderten zweiten Frequenzbereich durchführen kann, wobei Datenpakete für die Teilnehmerstation anstelle im ersten Frequenzbereich dann im zweiten Frequenzbereich an die Teilnehmerstation gesendet werden.

Die Zugangseinrichtung kann der Teilnehmerstation mittels der Mess-Signalisierung eine Einstellung des Empfangs-Frequenzbandes der Teilnehmerstation auf einen anderen Frequenzbereich innerhalb des Basis-Sendebereichs anweisen und nachfolgend Daten über zumindest eine neue erste Frequenz innerhalb des anderen Frequenzbereichs senden, wobei die für die Messung erforderliche Frequenz in einer benachbarten Zelle vorzugsweise bereits direkt innerhalb des neu einzustellenden Empfangs-Frequenzbereichs liegt. Andernfalls wird wiederholt ein neuer Frequenzbereich zugewiesen.

Bevorzugt wird entsprechend eine Zugangseinrichtung mit einer Sende- und Empfangseinrichtung zum Aufbauen einer Funkschnittstelle zu einer Teilnehmerstation und einer Steuereinrichtung zum Betreiben der Funkschnittstelle und der Übertragung von Datenpaketen, wobei die Steuereinrichtung oder eine mit der Zugangseinrichtung verbundene Steuereinrichtung eines Funk-Kommunikationssystems eingerichtet ist zum Durchführen des erfindungsgemäßen Verfahrens.

Bevorzugt wird entsprechend außerdem eine Teilnehmerstation mit einer Sende- und Empfangseinrichtung zum Aufbauen einer Funkschnittstelle zu einer Zugangseinrichtung und einer Steuereinrichtung zum Betreiben der Funkschnittstelle und der Übertragung bzw. dem Empfang von Datenpaketen, wobei die Steuereinrichtung eingerichtet ist zum Durchführen des erfindungsgemäßen Verfahrens.

Unter einem rein paket-orientierten System bzw. rein paket-orientierten Verbindungen zwischen einer Teilnehmerstation und einer Zugangseinrichtung sind im Sinne von 3G+-Verbindungen in Mobilfunksystemen zu verstehen, welche ohne eine direkte und ohne eine parallel geführte dedizierte Verbindung funktionieren. Ein eventuell vorhandener Rundsendekanal dient nicht zur Übertragung von dedizierten Daten und Nutzdaten und kann entsprechend parallel zu einer derartigen rein paket-orientierten Verbindung zwischen einer Teilnehmerstation und einer Zugangseinrichtung bestehen.

Gemäß einem ersten Konzept findet eine Planung der Datenübertragung in Form von Datenpaketen mit über einen vorgegebenen Zeitraum einem oder mehreren festen zeitlichen Abständen statt, sodass Messungen auf anderen Ressourcen durchgeführt werden können. Gemäß einem zweiten eigenständigen Konzept wird berücksichtigt, dass eine Teilnehmerstation möglicherweise in einem Empfangs-Frequenzband arbeitet, in welchem keine ausreichenden Informationen über benachbarte Ressourcen empfangbar sind, wobei in diesem Fall der Teilnehmerstation für den Empfang von Datenpaketen ein anderes Frequenzband zugewiesen wird und entsprechend die Datenpakete für diese Teilnehmerstation in dem anderen Frequenzband übertragen werden, so dass die Teilnehmerstation dann in einem Frequenzband empfängt, in dem ausreichende Informationen benachbarter Ressourcen empfangbar sind. Optional kann vorgesehen werden, dass dazu das Empfangs-Frequenzband mehrfach gewechselt wird, bis die Teilnehmerstation in einem geeigneten Empfangs-Frequenzband empfängt.

Ein Ausführungsbeispiel wird nachfolgend anhand der Zeichnung näher erläutert. Es zeigen:
- Fig. 1: schematisch eine beispielhafte Teilnehmerstation, welche in einer ersten Funkzelle Daten einer ersten netzseitigen Zugangseinrichtung empfängt und sich zugleich im Bereich einer zweiten Funkzelle befindet, deren Ressourcen überwacht werden sollen,
- Fig. 2: schematisch eine Datenübertragungs- und Signalisierungs-Abfolge gemäß einer ersten Ausführungsform, und
- Fig. 3: schematisch durch verschiedene Einrichtungen verwendete Frequenzbänder vor bzw. nach einem Wechsel eines Empfangs-Frequenzbandes der Teilnehmerstation.

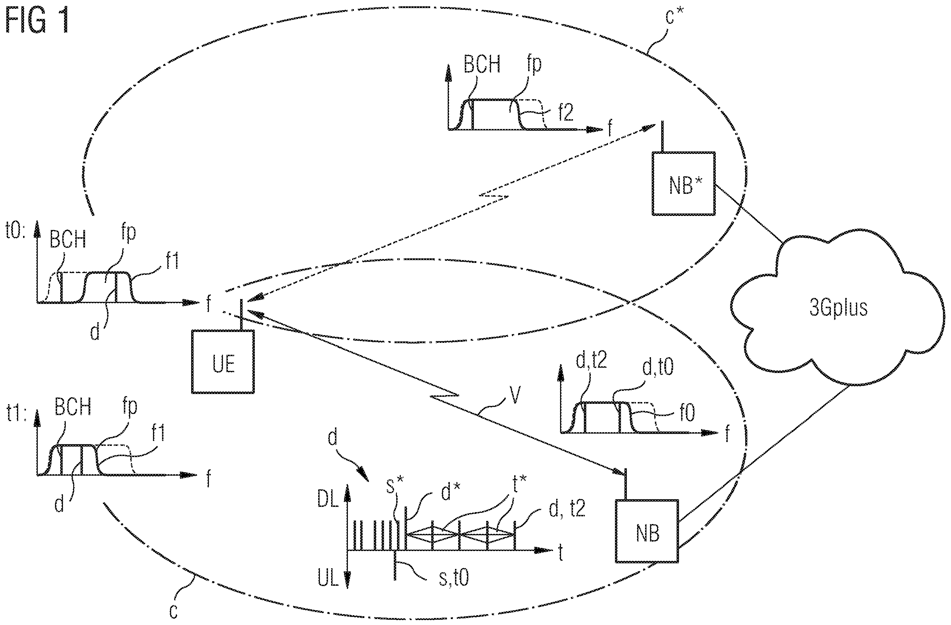

Fig. 1 zeigt beispielhaft eine Anordnung mit einer Teilnehmerstation UE als einer Endbenutzer-Einrichtung, welche über eine Funkschnittstelle V mit einer Zugangseinrichtung NB, typischerweise als NodeB bezeichnet, eines Mobilfunksystems als einem funkgestützten Kommunikationssystem kommuniziert. Bei dem dargestellten Mobilfunksystem handelt es sich insbesondere um ein System gemäß dem Standard 3G+, bei welchem zwischen den Zugangseinrichtungen NB, NB* und Teilnehmerstationen UE rein paket-orientierte Verbindungen über die Funkschnittstelle V aufgebaut werden. Eine Verbindung über einen dedizierten Kanal oder eine Verbindung über einen parallel zu paket-orientierten Kanälen aufgebauten dedizierten Kanal benötigt ein solches System nicht.

Entsprechend werden über einmal zugewiesene Kanäle der Funkschnittstelle V Datenpakete d, d* je nach Bedarf übertragen. Eine Koordination auf festgelegte Zeitpunkte oder Zeitschlitze über die Zeit t hinweg, erfolgt dabei nicht oder zumindest nicht zwingend. Die Übertragung von Datenpaketen d, d* erfolgt, wie aus dem Zeitdiagramm ersichtlich, je nach Bedarf von der netzseitigen Zugangseinrichtung NB in Abwärtsrichtung DL zu der Teilnehmerstation UE und/oder von der Teilnehmerstation UE in Aufwärtsrichtung UL zur Zugangseinrichtung NB. Die Datenpakete d, d* können zur Übertragung von reinen Nutzdaten verwendet werden. Möglich ist aber auch die Übertragung von Signalisierungsdaten zusätzlich zu Nutzdaten oder von nur Signalisierungsdaten in entsprechenden weiteren Datenpaketen s, s*.

Üblicherweise kann die netzseitige Zugangseinrichtung NB Datenpakete zur Übertragung über bestimmte Frequenzen innerhalb eines sehr großen Basis-Frequenzbereichs f0 verfügen, wie dies anhand des oberhalb der Zugangseinrichtung NB dargestellten Diagramms des verwendeten Frequenzspektrums über der Frequenz f skizziert ist. Hingegen weisen insbesondere kostengünstige Teilnehmerstationen ein nur begrenztes verfügbares Frequenzspektrum auf, wobei die dargestellte Teilnehmerstation UE zu einem ersten Zeitpunkt t0 nur Datenpakete innerhalb eines ersten Frequenzbereichs f1 empfangen kann. Der beispielhaft dargestellte erste Frequenzbereich f1 entspricht dem oberen Frequenzbereich des der Zugangseinrichtung NB zur Verfügung stehenden Basis-Frequenzbereichs f0. Die Zuweisung dieses ersten Frequenzbereichs f1 erfolgt üblicherweise bei Anmeldung der Teilnehmerstation UE in dem Mobilfunksystem, wobei durch das Mobilfunksystem bzw. entsprechende Steuereinrichtungen in diesem zugleich festgelegt wird, dass die Zugangseinrichtung Datenpakete d nur über Frequenzen innerhalb des ersten Frequenzbereichs f1 zu der Teilnehmerstation UE übertragen darf.

Bei dem dargestellten Ausführungsbeispiel befindet sich die Teilnehmerstation UE nicht nur innerhalb einer Funkzelle c der ersten Zugangseinrichtung NB sondern auch im Randbereich einer zweiten Funkzelle c* einer weiteren netzseitigen Zugangseinrichtung NB*. Bei dieser weiteren Zugangseinrichtung NB* kann es sich um eine Zugangseinrichtung des selben Mobilfunksystems handeln, welchem auch die erste Zugangseinrichtung NB zugeordnet ist. Es kann sich jedoch auch um eine weitere Netz-Zugangseinrichtung NB* eines weiteren Mobilfunksystems gleichen Standards handeln, sofern die beiden Mobilfunksysteme dann direkt oder über dritte Systeme miteinander verbunden sind und eine Übergabe einer Verbindung der Teilnehmerstation UE von der ersten Zugangseinrichtung NB zu der zweiten Zugangseinrichtung NB* ermöglichen, wie dies bei Mobilfunksystemen allgemein üblich ist. Die beispielhafte weitere Netz-Zugangseinrichtung NB* soll bei dem dargestellten Ausführungsbeispiel einen zweiten Frequenzbereich f2 zum Senden von Datenpaketen und Signalisierungen verwenden.

Insbesondere soll ein Rundfunkkanal BCH (Broad Casting Channel) zum Übertragen allgemeiner Informationen an sich z. B. anmeldende Teilnehmerstationen in einem Frequenzbereich senden, der außerhalb des ersten Frequenzbereichs f1 liegt, innerhalb dessen die Teilnehmerstation UE empfangsbereit ist. Beispielsweise kann über einen solchen Rundfunkkanal ein Identifizierungscode der netzseitigen Zugangseinrichtung NB, NB* verbreitet werden. Die Teilnehmerstation UE ist dadurch nur in der Lage, Messungen von Kanälen der zweiten Funkzelle c* bzw. der weiteren Zugangseinrichtung NB* nur in einem Frequenzbereich durchzuführen, in welchem sich der erste Frequenzbereich f1 und der zweite Frequenzbereich f2 überlappen. Dadurch können gegebenenfalls Intensitäten bestimmter Kanäle, insbesondere Pilotsignalkanäle ermittelt werden, nicht jedoch auch eine Identifizierungs-Information zum eindeutigen Identifizieren der weiteren Zugangseinrichtung NB*.

Um eine Messung in der zweiten Funkzelle c* mit der weiteren netzseitigen Zugangseinrichtung NB* durchzuführen, wobei keine von der ersten Zugangseinrichtung NB gesendeten und zu empfangenden Datenpakete d verlorengehen sollen, wird eine Verfahrensweise gemäß einer ersten Ausführungsform bevorzugt, wobei verfahrensgemäß ein Inter-Frequenz-Monitoring und/oder ein Inter-System-Monitoring als Szenario angewendet wird. Verfahrensgemäß überträgt die Teilnehmerstation UE bei Bedarf eine Messung in einer Nachbarzelle, hier in der zweiten Zelle c*, durchzuführen, eine Signalisierung s in Form insbesondere eines speziellen Signalisierungs-Datenpaketes zu einem ersten Zeitpunkt t0 über die Funkschnittstelle V an die Zugangseinrichtung NB. Die netzseitige Zugangseinrichtung NB und/oder eine mit dieser verbundene Steuereinrichtung des Mobilfunksystems sendet daraufhin eine entsprechende Mess-Signalisierung s* in Abwärtsrichtung DL an die Teilnehmerstation UE. Außerdem wird veranlasst, dass nachfolgend eine oder mehrere zeitliche Lücken bei der Übertragung von Datenpaketen d abgestimmt vorgesehen werden. Die zeitlichen Lücken sind so gewählt, dass für die Teilnehmerstation UE ein ausreichend großer zeitlicher Abstand t* besteht, um die Empfangsfrequenz auf einen Frequenzbereich zu wechseln, über welchen entsprechende Messungen in der benachbarten zweiten Zelle c* oder einer zweiten Ressource möglich sind oder voraussichtlich möglich sind. Sollten weitere Frequenzbereiche existieren, in welchen möglicherweise Messungen in der zweiten Zelle c* durchzuführen sind, können nachfolgende zeitliche Abstände t* zwischen der Übertragung von Datenpaketen d genutzt werden, um auch in solchen weiteren möglichen Frequenzbereichen entsprechende Messungen durchzuführen.

Damit die Teilnehmerstation UE Kenntnis von den Zeitpunkten der zeitlichen Lücken erlangt, wird die Mess-Signalisierung s* an die Teilnehmerstation UE übertragen. Vorgesehen werden kann, dass bei Empfang einer Mess-Signalisierung s* ein fest vorgegebener zeitlicher Ablauf beim Versenden von Datenpaketen d durch die Zugangseinrichtung NB einzuhalten ist, so dass die zeitlichen Abstände t* für Messungen systembedingt in Art einer Standardisierung vorgegeben sind. Derartige Basisinformationen können jedoch nicht nur im Rahmen einer allgemeinen Standardisierung festgelegt werden, sondern der Teilnehmerstation UE auch in regelmäßigen zeitlichen Abständen über Datenpakete und/oder bei deren Anmeldung im Mobilfunksystem über die Zugangseinrichtung NB und/oder über einen Rundfunkkanal BCH mitgeteilt werden. Außerdem besteht die Möglichkeit, die Angabe über den Beginn und/oder das Ende und/oder die Dauer des zeitlichen Abstandes t* mittels der Mess-Signalisierung s* selber individuell von der Zugangseinrichtung NB an die Teilnehmerstation UE zu übertragen.

Vorteilhaft ist auch die Übertragung eines Datenpaketes d* von der Zugangseinrichtung NB an die Teilnehmerstation UE zu Beginn bzw. unmittelbar vor einer solchen zeitlichen Lücke mit einer erhöhten Leistung, wie dies in dem Zeitdiagramm skizziert ist. Die erhöhte Leistung für das Aussenden dieses Datenpaketes d* relativ zur Sendeleistung der übrigen Datenpakete d bietet den Vorteil einer Übertragung über die Funkschnittstelle V mit einem reduzierten Verlustrisiko durch Störungseinflüsse, so dass erneute Übertragungen des Datenpaketes d* oder redundante Übertragungen von Daten des Datenpaketes d* mittels weiterer Datenpakete nur noch in reduziertem Umfang oder gegebenenfalls gar nicht erforderlich sind. Unabhängig davon kann eine derartige Leistungsvariation der Sendeleistung insbesondere bei ansonsten konstant verwendeter Sendeleistung auch anstelle einer eigenständigen Mess-Signalisierung s* zur Signalisierung einer nachfolgenden zeitlichen Lücke verwendet werden.

Im Falle des Inter-Frequenz-Szenarios oder des Inter-System-Szenarios stimmt insbesondere eine Teilnehmerstation UE mit nur einem einzelnen Empfänger ihren Empfänger für eine vorbestimmte Zeitdauer auf eine andere Frequenz ab, auf welcher eine Messung durchgeführt wird, wodurch die Teilnehmerstation UE jedoch nicht in der Lage ist, Übertragungen von ihrer momentanen sie bedienenden Funkzelle c zu empfangen. 3G+ als das beispielhafte Mobilfunksystem ist ein paket-orientiertes System, so dass dessen Planungseinrichtung bzw. Planungs-Instanz zwei Freiheitsgrade hat, einerseits eine zeitliche Einteilung und andererseits eine Sub-Carrier/Frequenz-Einteilung (Sub-Carrier: Subträger).

Ein zeitabhängiger Planungsansatz ermöglicht der Planungs-Instanz die Zeitmomente zum Planen zu verwenden, welche eine bestmögliche Qualität der Übertragung ermöglichen. In einem solchen Fall sind jedoch die Zeitmomente, zu denen Übertragungen zu der Teilnehmerstation UE tatsächlich eingeplant werden, möglicherweise nur in einem gewissen Ausmaß oder gar nicht für die Teilnehmerstation bekannt. Folglich können der Teilnehmerstation, welche Messungen auf einer anderen Frequenz durchführt, übertragene Datenpakete bei einem willkürlichen Umschalten der Frequenz zur Messung verlorengehen. Ein solcher Verlust soll vermieden werden. Ein entsprechendes Verfahren zum Durchführen von Messungen auf einer anderen Frequenz außerhalb des eigenen ersten Frequenzbereichs f1 wird durch die Teilnehmerstation UE insbesondere dann durchgeführt, wenn kein geeigneter Intra-Frequenz-Nachbar innerhalb des eigenen Frequenzbereichs f1 erfasst wird und die Qualität der die Teilnehmerstation UE bedienenden ersten Zelle c1 zu gering wird.

In einem solchen Fall signalisiert die Teilnehmerstation UE mittels einer geeigneten Signalisierung s in Aufwärtsrichtung UL den Bedarf einer Messung. Die Signalisierung s kann dabei auch indirekt dadurch erfolgen, dass die Teilnehmerstation UE in beliebigen oder auch in fest vorgegebenen zeitlichen Abständen in Aufwärtsrichtung UL die momentane Empfangs-Qualität der diese bedienenden Zelle c berichtet. Aufgrund dieses Berichts kann dann die Zugangseinrichtung NB oder eine mit dieser verbundene Steuereinrichtung bzw. Steuerinstanz entscheiden, ob es erforderlich ist, dass die Teilnehmerstation UE Messungen durchführt. Falls ja, geht die Zugangseinrichtung NB in einen regulären Planungs-Modus im Zeitbereich über und signalisiert dies mittels der Mess-Signalisierung s* der Teilnehmerstation UE. Alternativ kann natürlich auch vorgesehen werden, dass auf eine entsprechende Signalisierung s der Teilnehmerstation UE durch die Netzeinrichtung NB in jedem Fall eine entsprechende Mess-Signalisierung s* veranlasst wird.

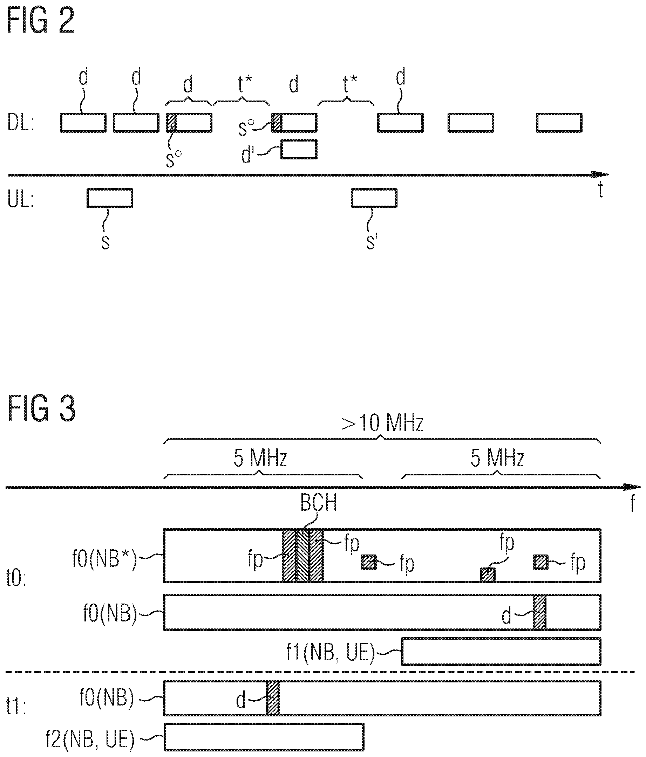

Eine bestimmte Zeitdifferenz zwischen zwei Datenübertragungen, das heißt der Abstand zwischen zwei in Abwärtsrichtung DL übertragenen Datenpaketen d kann gemäß einer ersten Variante signalisiert werden, wobei dies insbesondere in Fällen geeignet ist, in denen große zeitliche Lücken bzw. Abstände t* zwischen zwei Planungs-Zeitpunkten zum Datenübertragen erforderlich sind. Alternativ und einfacher sowie geeigneter im Fall einer häufig Datenpakete empfangenden Teilnehmerstation UE ist das Senden eines Indikator-Flags s° durch die Zugangseinrichtung NB, wobei das Indikator-Flag s° als Mess-Signalisierung einen regulären Planungs-Modus signalisiert, wie dies in Fig. 2 skizziert ist. Aufgrund des Empfangs dieses Indikator-Flags s° erkennt die Teilnehmerstation UE, dass über einen Zeitraum zwischen dem Datenblock bzw. Datenpaket, welches das Indikator-Flag s° enthält, und dem nächsten Datenpaket die Übertragung von Datenpaketen mit vorzugsweise jeweils gleichen Daten für jeden nachfolgenden Planungs-Zeitpunkt wiederholt wird, bis das Indikator-Flag wieder gelöscht wird.

Das Löschen des Indikator-Flags s° kann durch die Zugangseinrichtung NB aufgrund des Empfangs einer Signalisierung durch die Teilnehmerstation UE durchgeführt werden. Die Signalisierung der Teilnehmerstation UE, welche auch bei anderen Varianten prinzipiell verwendbar ist, kann anzeigen, dass eine geeignete Inter-Frequenz-Zelle bzw. ein geeignetes Inter-Frequenz-System identifiziert wurde oder die Qualität der eigenen bedienenden Zelle c über einem bestimmten Schwellwert einschließlich Berücksichtigung einer Hysterese liegt, so dass in letzterem Fall ein Wechsel nicht erforderlich ist. Die Zugangseinrichtung NB sendet nachfolgend in üblicher Art und Weise Datenpakete zu vorzugsweise beliebigen Zeitpunkten bis zum Empfang einer erneuten Signalisierung s zur Signalisierung eines Messbedarfs seitens der Teilnehmerstation UE. Abhängig von dem Ergebnis, insbesondere bei einem nicht vorzunehmenden Zellwechsel oder Systemwechsel durch die Teilnehmerstation UE, wird die übliche Planung der Übertragung von Datenpaketen wieder aufgenommen.

Ein solcher Indikator in Form des Indikator-Flags s° zum Veranlassen eines regulären Planens mit festen zeitlichen Lücken bzw. Abständen t* ist insbesondere für Dienste geeignet, welche nicht in Echtzeit (non real-time services) durchgeführt werden. Ein solcher Indikator kann aber auch für Echtzeit-Dienste vorteilhaft verwendet werden, wie im Fall einer Übertragung von Sprache, da auch in Echtzeit-Diensten prinzipiell kein Erfordernis besteht, stets eine vorbestimmte gleiche Übertragungslücke zwischen zwei aufeinander folgenden Blöcken bzw. Datenpaketen vorzusehen. Ferner kann eine verschiedene Segmentierung eines Echtzeit-Dienstes, beispielsweise von Sprachrahmen, und eine entsprechende Planung, insbesondere mit höherer Leistung, die Messfähigkeiten optimieren. Beispielsweise wird bei VoIP (Voice-over-InternetProtocol/Sprachübertragung gemäß Internet-Protokoll) über HSDPA angenommen, dass ein Sprachrahmen mit 20 ms in einen 2 ms-Datenburst komprimiert wird und dass ein solcher Burst regulär alle 20 ms übertragen wird.

Ein Ansatz mit zeitabhängiger Planung bei der gleichen Magnitude kann auch für 3G+ verwendet werden. Beispielsweise wird im Fall einer Komprimierung eines Sprachrahmens mit einem Verhältnis von 10 und der Übertragung dieses komprimierten Bursts alle 10 - 40 ms ein klarer Kompromiss zwischen der Anzahl von Übertragungen und der Zeit zwischen den Übertragungen aufgrund einer IP-Überbelastung geschlossen. Sprachrahmen zu kürzen führt zu einem sehr schlechten Verhältnis von Roh-Bit zu Daten-Bit im Fall langer Zeitdauern zwischen der Übertragung, so dass die Sprachqualität aufgrund des Erfordernisses erneuter Übertragungen leiden kann. Daher kann ein geeigneter Wert in einem solchen Beispiel in der Größenordnung von 10 - 20 ms gewählt werden. Andererseits ist mit zunehmender Dauer der Zeiträume zwischen den Übertragungen von Datenpaketen die Nutzbarkeit für Messungen um so höher, da Schaltzeiten etc. nicht abgezogen werden müssen. Folglich ist besonders vorteilhaft, dass im Fall des Erfordernisses einer exzessiven Messung durch die Teilnehmerstation UE seitens der Zugangseinrichtung NB eine größere Blocksegmentierung verwendet werden kann.

Insbesondere in einem solchen Fall ist die Erhöhung der Sendeleistung, vorzugsweise bereits für die erste Übertragung eines nachfolgenden Datenpakets d*, gegebenenfalls auch für die Übertragung weiterer Datenpakete, auf einen höheren Wert vorteilhaft, um das Erfordernis erneuter Übertragungen zu reduzieren und um der Teilnehmerstation UE zu ermöglichen, die Zeit zwischen Übertragungen von Datenpaketen d*, d für Messungen optimal zu nutzen. Vorzugsweise kann auch in einem solchen Fall durch die Verwendung eines Indikators für das reguläre Planen in Art des Indikator-Flags s° eine entsprechende Signalisierung und Sendung entsprechender Datenpakete durchgeführt werden.

Unabhängig davon kann in dem Fall, dass ein Indikator-Flag s° für ein reguläres Planen von Übertragungs-Zeitpunkten gesetzt ist, jede erforderliche Neu-Übertragung eines Datenpaketes parallel und vorzugsweise zur gleichen Zeit zu den weiterlaufenden regulären Übertragungen auf einem verschiedenen Zweig oder Sub-Carrier durchgeführt werden.

Das Setzen des Indikator-Flags s° für reguläres Planen durch die Zugangseinrichtung NB kann auch als eine direkte Aufforderung der Zugangseinrichtung NB an die Teilnehmerstation UE angesehen werden, Inter-System-Messungen und/oder Inter-Frequenz-Messungen gemäß einer zuvor vorgegebenen Mess-Prioritäts-Liste durchzuführen. Vorgegangen wird so, als würde das System beabsichtigen, die Teilnehmerstation UE zu einem anderen System zu übergeben (Handover), wobei das andere System z. B. eine geringere Auslastung hat oder allgemein für eine angeforderte Art von Dienst besser geeignet ist.

Fig. 2 skizziert eine Abfolge von Datenpaketen d, welche in zeitlicher Abfolge von der netzseitigen Zugangseinrichtung NB zu der Teilnehmerstation UE übertragen werden, wie dies im Wesentlichen auch aus Fig. 1 ersichtlich ist. Dargestellt ist, dass die Zugangseinrichtung NB mittels eines Indikator-Flags s° zu Beginn eines Datenpakets d der Teilnehmerstation UE signalisiert, dass nachfolgend eine Übertragung von Datenpaketen mit ausreichend großen zeitlichen Abständen t* zwischen einzelnen Datenpaketen d durchgeführt wird, um der Teilnehmerstation die Durchführung von Messungen auf anderen Trägern und/oder Systemen zu ermöglichen. Sobald ein Datenpaket d ohne ein einleitend gesetztes Indikator-Flag s° von der Teilnehmerstation UE empfangen wird, erkennt die Teilnehmerstation UE daraus, dass keine weiteren zeitlichen Abstände t* mehr vorgesehen werden und nachfolgend in üblicher Art und Weise und insbesondere zeitlich ungeregelt Datenpakete d übertragen werden. Außerdem ist dargestellt, dass über beispielsweise einen parallelen Träger oder Sub-Träger, das heißt z. B. über eine weitere Frequenz innerhalb des durch die Teilnehmerstation UE empfangbaren Frequenzbereichs f1, eine erste wiederholte Übertragung des zweiten Datenpakets d* durchgeführt wird. Das Verwenden desselben Sub-Träger-Zweigs in dem Fall des gesetzten Indikator-Flags s° für reguläres Planen mit vorgegebenen zeitlichen Abständen t* stellt lediglich eine Option dar, wobei irgendein beliebiger Sub-Träger in dem empfangenen Band der Teilnehmerstation UE verwendbar ist. Das Verwenden desselben Sub-Trägers kann jedoch die Situation für die Teilnehmerstation UE für Frequenzsprünge erleichtern. Vorteilhafterweise, jedoch nicht zwingend erforderlich, erfolgt das Setzen des Indikator-Flags s° durch die Zugangseinrichtung NB so lange, bis die Teilnehmerstation UE das erfolgreiche Abschließen der Messungen an die Zugangseinrichtung NB signalisiert hat.

Möglich sind auch Verfahrensweisen, bei denen der reguläre Planungs-Modus mit vorgegebenen festen zeitlichen Abständen t* mit einem unterschiedlichen zeitlichen Zyklus durchgeführt wird. Dies bedeutet, dass bei gesetztem Indikator-Flags s° die Zugangseinrichtung NB signalisiert, dass das reguläre Planen für diese Teilnehmerstation UE beibehalten wird, jedoch mit einer unterschiedlichen Periodizität.

Die Fig. 1 und 3 veranschaulichen ein zweites Ausführungsbeispiel zum Durchführen von Messungen bzw. zum Durchführen eines so genannten Monitorings seitens der Teilnehmerstation UE, wobei die Teilnehmerstation UE im Bedarfsfall seitens der netzseitigen Einrichtungen, insbesondere seitens der Zugangseinrichtung NB die Verwendung eines anderen, zweiten Frequenzbereichs f2 anstelle eines bislang verwendeten ersten Frequenzbereichs f1 angewiesen bekommt. Vorzugsweise signalisiert die Teilnehmerstation UE über die Funkschnittstelle V der netzseitigen Zugangseinrichtung NB den Bedarf, ein Intra-Frequenz-Monitoring als Messung durchführen zu müssen, da sie in dem ihr zugewiesenen ersten Frequenzbereich f1 keine ausreichenden Messungen in einer zweiten Zelle c* bzw. von einer zweiten Zugangseinrichtung NB* durchführen kann. Zu einem ersten Zeitpunkt t0 empfängt die Teilnehmerstation UE mit ihrer Empfängereinrichtung Frequenzen in einem ersten Frequenzbereich f1 als dem ihr zuvor zugewiesenen Empfangsband. Entsprechend sendet die erste Zugangseinrichtung NB Daten d in diesem ersten Frequenzbereich f1, obwohl der Zugangseinrichtung NB prinzipiell ein größerer Basis-Frequenzbereich f0 zur Verfügung steht. Die weitere Zugangseinrichtung NB* einer benachbarten und teilweise überlappenden zweiten Zelle c* sendet ebenfalls in diesem Basis-Frequenzbereich f0. Verteilt über den Frequenzbereich sind Pilotsignale fp, welche teilweise in den ersten Frequenzbereich f1 fallen, welcher durch die Teilnehmerstation UE empfangen wird. Entsprechend kann die Teilnehmerstation UE erkennen, dass eine weitere Zelle c* empfangbar ist. Jedoch kann die Teilnehmerstation UE diese weitere Zelle c* nicht ausreichend identifizieren, da ein Rundfunkkanal BCH der weiteren zweiten Zelle c* außerhalb des ersten Frequenzbereichs f1 liegt.

Nach einer Signalisierung s seitens der Teilnehmerstation UE an die ihr zugeordnete Zugangseinrichtung NB weist die Zugangseinrichtung NB oder eine mit dieser verbundene Steuereinrichtung der Teilnehmerstation UE einen zweiten Frequenzbereich f2 zu, was über eine entsprechende Mess-Signalisierung s* erfolgt. Nachfolgend wechselt die Teilnehmerstation UE durch eine entsprechende neue Abstimmung ihres verfügbaren Frequenzbereichs auf den zweiten Frequenzbereich f2 zu dem zweiten Frequenzbereich f2. Wie aus Fig. 3 unten ersichtlich, kann die Teilnehmerstation UE nach der neuen Abstimmung den Rundfunkkanal BCH der zweiten Zelle c* empfangen und entsprechend alle notwendigen Informationen ermitteln. Damit kein Datenverlust auftritt, werden zusammen mit der neuen Abstimmung der Teilnehmerstation UE auf den zweiten Frequenzbereich f2 zu versendende Datenpakete entsprechend auf einer Frequenz innerhalb des zweiten Frequenzbereichs f2 an die Teilnehmerstation UE gesendet. Zeitabhängig einem späteren Zeitpunkt t1 ist die Teilnehmerstation UE somit in der Lage, sowohl die notwendigen Informationen der benachbarten zweiten Zelle c* als auch die an sie gerichteten Datenpakete d der eigenen und bislang zugeordneten Netz-Zugangseinrichtung NB verlustfrei zu empfangen.

Für die Leistungsfähigkeit eines Kommunikationssystems ist es von Bedeutung, dass die Teilnehmerstation UE den Rundfunkkanal BCH einer benachbarten Zelle c* empfangen bzw. lesen kann oder zumindest die benachbarten Zellen c* im Vorübergehen identifizieren kann, während der Empfang von Daten bzw. Datenpaketen d kontinuierlich durchgeführt wird und nicht auf bestimmte Unterbrechungsperioden bei der Übersendung von Datenpaketen d gewartet werden muss. Besonders bevorzugt ist auch eine Kombination mit den Verfahrensweisen des ersten Ausführungsbeispiels umsetzbar.

Berücksichtigt wird bei dieser Ausführungsform, dass gemäß 3G+ nicht alle Terminals bzw. Teilnehmerstationen UE die Fähigkeit haben, die vollständige Systembandbreite, z. B. 20 MHz zu empfangen, wobei insbesondere Niederpreis-Terminals eine beschränkte Empfängerfähigkeit aufweisen werden. Im Fall des beschriebenen Beispiels ist die Teilnehmerstation UE anfänglich nur in dem oberen Band des Frequenzbereichs f1 eingeplant, während eine benachbarte Zugangseinrichtung NB* mit dem gleichen Frequenzbereich f0 wie dem Frequenzbereich der eigenen Zugangseinrichtung NB deren Rundfunkkanal BCH in dem unteren Bereich sendet. In diesem Fall ist die Teilnehmerstation UE nicht in der Lage, die benachbarte Zelle c* vollständig zu identifizieren. Die Teilnehmerstation UE kann jedoch Messungen der Pilotsignale fp durchführen, welche über die gesamte Bandbreite verteilt sind, wird jedoch nicht in der Lage sein, letztendlich die Zelle vollständig zu identifizieren, wie dies bei GSM mit der dortigen BSIC-Identifikation (BSIC: Base Station Identity Code/Basisstations-Identifizierungs-Code) möglich wäre. Entsprechend berichtet die Teilnehmerstation UE die empfangene Pilotleistung der Nachbarzelle c* an die ihr selber zugeordnete Zugangseinrichtung NB und/oder indiziert über die Aufwärtsverbindung UL, dass der Rundfunkkanal BCH oder ein anderer erforderlicher Kanal zum Vervollständigen der Identifizierungs-Information der benachbarten Zelle c* nicht innerhalb der Empfänger-Bandbreite der Teilnehmerstation UE liegt. Vorteilhafterweise kann die Teilnehmerstation UE dabei im Rahmen der Signalisierung s den Frequenzbereich f1 übermitteln, welchen sie momentan beobachten kann, sofern dies nicht bereits der die Teilnehmerstation UE bedienenden Zugangseinrichtung NB bekannt ist.

Beruhend auf einer solchen Information kann die Zugangseinrichtung NB beginnen, die Teilnehmerstation UE in dem zuvor nicht verwendeten Bereich ihrer System-Bandbreite f0 einzuplanen und dies der Teilnehmerstation UE mittels der Mess-Signalisierung s* signalisieren. Nach einer entsprechenden Umstellung vom ersten Frequenzbereich f1 in den zweiten Frequenzbereich f2 fällt der erforderliche Kanal, insbesondere Rundfunkkanal BCH der benachbarten Zelle c* auch innerhalb den durch die Teilnehmerstation UE empfangbaren zweiten Frequenzbereich f1. Optional kann vorgesehen werden, dass weitere Wechsel durchgeführt werden, sofern der zweite Frequenzbereich f2 ebenfalls nicht ausreichend ist, die erforderlichen Informationen der benachbarten Zelle c* zu erlangen.

Für die Teilnehmerstation UE kann es gegebenenfalls erforderlich sein, den Rundfunkkanal BCH der benachbarten Zelle c* oder einen ähnlichen Kanal oder eine Kanal-Konfiguration über eine bestimmte Zeit zu überwachen, um letztendlich deren Zugangseinrichtung NB* zu identifizieren. Beispielsweise kann dazu der Rundfunkkanal BCH eine Identifizierungs-Signatur oder Identifizierungs-Nummer enthalten. Der für den Rundfunkkanal BCH verwendete Sub-Träger und der Farb-Code der umgebenden Pilotkanäle könnte auch als ein Unterscheidungsmerkmal zwischen den Zugangseinrichtungen NB, NB* verwendet werden.

Bei dem anhand Fig. 3 skizzierten Beispiel wird von einer beispielhaften System-Bandbreite eines Basis-Frequenzbereichs f0 von 10 MHz und einer minimalen Empfänger-Kapazität von 5 MHz der Teilnehmerstation UE ausgegangen. Falls in dem Netz keine Kenntnis bezüglich der Teilnehmerstations-Empfänger-Kapazität verfügbar ist, kann eine Neueinstellung des Frequenzbereichs der Teilnehmerstation UE auch wiederholt mehrfach durchgeführt werden, beispielsweise im Fall einer System-Bandbreite von 20 MHz und einer Empfänger-Bandbreite der Teilnehmerstation UE von zumindest 5 MHz viermal, bis die Nachbarzelle bzw. deren Rundfunkkanal BCH durch die Teilnehmerstation UE gefunden wurde. Ziel der Verfahrensweise ist letztendlich, dass die Teilnehmerstation UE innerhalb ihres Frequenzbereichs f2 sowohl die eigenen Datenpakete als auch notwendige Informationen aus benachbarten Zellen empfangen kann.

## Patentansprüche

1. Verfahren zur Vorbereitung einer Verbindungsweiterschaltung in einem Funk-Kommunikationssystem, wobei in dem Funk-Kommunikationssystem eine Signalübertragung innerhalb einer Verbindung (V) auf einer Funkschnittstelle zwischen einer Teilnehmerstation (UE) und einer Zugangseinrichtung (NB) ausschließlich paketorientiert erfolgt,
bei dem
von der Teilnehmerstation (UE) ein Bedarf zum Durchführen von Messungen von Signalen zu der Zugangseinrichtung (NB) signalisiert wird,
von der Zugangseinrichtung (NB) auf die Signalisierung der Teilnehmerstation (UE) hin eine Mess-Signalisierung (s*) zu der Teilnehmerstation (UE) gesendet wird, die darauf hinweist, dass Übertragungen von Datenpaketen (d) von der Zugangseinrichtung an die Teilnehmerstation (UE) im ersten Frequenzbereich (f1) über einen begrenzten Zeitraum mit einem oder mehreren Abständen zueinander stattfinden, sodass die Teilnehmerstation (UE) zwischen den Übertragungen der Datenpakete (d) Messungen auf Ressourcen des zweiten Frequenzbereichs (f2) durchführen kann, wobei die Mess-Signalisierung (s*) eine Angabe über den Beginn und/oder das Ende und/oder die Dauer eines zeitlichen Abstandes (t*) enthält, und
von der Teilnehmerstation (UE) aufgrund der empfangenen Mess-Signalisierung (s*) während eines Empfangs von Datenpaketen (d) innerhalb der Verbindung (V) in einem ersten Frequenzbereich (f1) Messungen von Signalen zumindest einer weiteren Zugangseinrichtung (NB*) in einem zu dem ersten Frequenzbereich (f1) disjunkten zweiten Frequenzbereich (f2) durchgeführt werden.

2. Verfahren nach Anspruch 1, wobei
die Zugangseinrichtungen (NB, NB*) jeweils einem gleichen oder unterschiedlichen Funk-Kommunikationssystem zugeordnet sind.

3. Verfahren nach Anspruch 1 oder 2, bei dem
die Teilnehmerstation (UE) die Messungen von Signalen in dem zweiten Frequenzbereich (f2) während einer begrenzten Zeitdauer durchführt.

4. Verfahren nach einem vorstehenden Anspruch, bei dem
die Teilnehmerstation (UE) den Bedarf mittels einer Signalisierung einer gemessenen Empfangsqualität zu der Zugangseinrichtung (NB) signalisiert, und die Zugangseinrichtung (NB) abhängig von einer Unterschreitung eines vorgegebenen Schwellwertes der Empfangsqualität die Mess-Signalisierung (s*) zu der Teilnehmerstation (UE) sendet.

5. Verfahren nach einem vorstehenden Anspruch, bei dem
die Zugangseinrichtung (NB) nach Aussendung der Mess-Signalisierung (s*) für eine begrenzte Zeitdauer Datenpakete (d) der Verbindung (V) mit einem für die Durchführung der Messungen bemessenen zeitlichen Abstand (t*) übertragen werden.

6. Verfahren nach Anspruch 5, bei dem
der Zeitbereichs-Planungs-Modus der Teilnehmerstation (UE) mittels eines den Datenpaketen zugeordneten Indikator-Flags (s°) signalisiert wird.

7. Verfahren nach einem vorstehenden Anspruch, bei dem
ein Datenpaket (d) in dem ersten Frequenzband (f1) parallel auf zumindest zwei Unterfrequenzbändern von der Zugangseinrichtung (NB) übertragen wird.

8. Verfahren nach einem vorstehenden Anspruch, bei dem
die Zugangseinrichtung (NB) der Teilnehmerstation (UE) den zeitlichen Abstand zwischen Übertragungen zweier aufeinander folgender Datenpakete mit unterschiedlichem Inhalt signalisiert.

9. Verfahren nach einem vorstehenden Anspruch, bei dem der erste (f1) und der zweite Frequenzbereich (f2) einem gemeinsamen Basis-Frequenzbereich (f0) zugeordnet sind.

10. Verfahren nach einem vorstehenden Anspruch, bei dem
die Teilnehmerstation (UE) Messungen von Pilotsignalen (fp) der weiteren Zugangseinrichtung (NB*) in dem ersten Frequenzbereich (f1) durchführt (UE) und der Zugangseinrichtung (NB) gemessene Empfangsleistungen signalisiert.

11. Verfahren nach Anspruch 10, bei dem
der Teilnehmerstation (UE) zum Empfangen eines Rundsendekanals (BCH) der weiteren Zugangseinrichtung (NB*) der zweite Frequenzbereich (f2) für die Signalübertragung innerhalb der Verbindung (V) zugewiesen wird.

12. Verfahren nach Anspruch 11, bei dem
die Zugangseinrichtung (NB) der Teilnehmerstation (UE) die Zuweisung des zweiten Frequenzbereiches (f2) mittels einer Mess-Signalisierung (s*) signalisiert.

13. Zugangseinrichtung (NB) eines Funk-Kommunikationssystems, aufweisend zumindest eine Sende- und Empfangseinrichtung zum Senden und Empfangen von Signalen innerhalb einer Verbindung (V) in einem ersten Frequenzbereich (f1) auf einer Funkschnittstelle zu einer Teilnehmerstation (UE), und zumindest eine Steuereinrichtung
zum Generieren einer Mess-Signalisierung (s*) nach Empfang eines von der Teilnehmerstation (UE) signalisierten Bedarfs zum Durchführen von Messungen von Signalen zumindest einer weiteren Zugangseinrichtung (NB*) in einem zu dem ersten Frequenzbereich (f1) disjunkten zweiten Frequenzbereich (f2), wobei die Mess-Signalisierung (s*) darauf hinweist, dass Übertragungen von Datenpaketen (d) von der Zugangseinrichtung an die Teilnehmerstation (UE) im ersten Frequenzbereich (f1) über einen begrenzten Zeitraum mit einem oder mehreren Abständen zueinander stattfinden, sodass die Teilnehmerstation (UE) zwischen den Übertragungen der Datenpakete (d) Messungen auf Ressourcen des zweiten Frequenzbereichs (f2) durchführen kann, und wobei die Mess-Signalisierung (s*) eine Angabe über den Beginn und/oder das Ende und/oder die Dauer eines zeitlichen Abstandes (t*) enthält, und
zum Steuern der Aussendung der Mess-Signalisierung (s*) zu der Teilnehmerstation (UE) durch die Sende- und Empfangseinrichtung.

14. Teilnehmerstation (UE) eines Funk-Kommunikationssystems, aufweisend
zumindest eine Sende- und Empfangseinrichtung zum Senden und Empfangen von Signalen innerhalb einer Verbindung (V) in einem ersten Frequenzbereich (f1) auf einer Funkschnittstelle zu einer Zugangseinrichtung (NB) des Funk-Kommunikationssystems, und
zumindest eine Steuereinrichtung zum Signalisieren eines Bedarfs zum Durchführen von Messungen von Signalen und zum Durchführen von Messungen zumindest einer weiteren Zugangseinrichtung (NB*) in einem zu dem ersten Frequenzbereich (f1) disjunkten zweiten Frequenzbereich (f2) nach Empfang einer durch das Signalisieren veranlasste Mess-Signalisierung (s*) von der Zugangseinrichtung (NB), wobei die Mess-Signalisierung (s*) darauf hinweist, dass Übertragungen von Datenpaketen (d) von der Zugangseinrichtung an die Teilnehmerstation (UE) im ersten Frequenzbereich (f1) über einen begrenzten Zeitraum mit einem oder mehreren Abständen zueinander stattfinden, sodass die Teilnehmerstation (UE) zwischen den Übertragungen der Datenpakete (d) Messungen auf Ressourcen des zweiten Frequenzbereichs (f2) durchführen kann, und wobei die Mess-Signalisierung (s*) eine Angabe über den Beginn und/oder das Ende und/oder die Dauer eines zeitlichen Abstandes (t*) enthält,
wobei die Teilnehmerstation (UE) so eingerichtet ist, dass sie zwischen den Übertragungen der Datenpakete (d) Messungen auf Ressourcen des zweiten Frequenzbereichs (f2) durchführen kann.

15. Funk-Kommunikationssystem, aufweisend zumindest eine Zugangseinrichtung (NB) nach Anspruch 13 und zumindest eine Teilnehmerstation (UE) nach Anspruch 14.

## Claims

1. Method for preparing a handoff in a radio communication system, wherein a signal transmission within a connection (V) on a radio interface between a user station (UE) and an access device (NB) occurs exclusively in packet-switched manner in the radio communication system,
in which
the user station (UE) signals to the access device (NB) a requirement for carrying out measurements of signals, the access device (NB) responds to the signaling of the user station (UE), by transmitting measurement signaling (s*) to the user station (UE) indicating that transmissions of data packets (d) from the access device to the user station (UE) take place in the first frequency range (f1) over a limited period of time at one or more intervals from one another, which means that the user station (UE) can carry out measurements for resources of the second frequency range (f2) between the transmissions of the data packets (d), the measurement signaling (s*) containing a statement about the beginning and/or the end and/or the duration of a time interval (t*), and
the user station (UE) carries out, on the basis of the received measurement signaling (s*), during a reception of data packets (d) within the connection (V) in a first frequency range (f1), measurements of signals of at least one further access device (NB*) in a second frequency range (f2) disjoint from the first frequency range (f1).

2. Method according to Claim 1, wherein the access devices (NB, NB*) are in each case allocated to an identical or different radio communication system.

3. Method according to Claim 1 or 2, in which the user station (UE) carries out the measurements of signals in the second frequency range (f2) during a limited period of time.

4. Method according to a preceding claim, in which the user station (UE) signals the requirement by signaling a measured quality of reception to the access device (NB) and the access device (NB), in dependence on a predetermined threshold value of the quality of reception being subcedeed, transmits the measurement signaling (s*) to the user station (UE).

5. Method according to one preceding claim, in which the access device (NB), after sending out the measurement signaling (s*), for a limited period of time transmits data packets (d) of the connection (V) with a time interval (t*) dimensioned for carrying out the measurements.

6. Method according to Claim 5, wherein the time domain planning mode is signaled to the user station (UE) by means of an indicator flag (s°) allocated to the data packets.

7. Method according to a preceding claim, wherein a data packet (d) is transmitted in the first frequency band (f1) in parallel on at least two subfrequency bands by the access device (NB).

8. Method according to a preceding claim, wherein the access device (NB) signals to the user station (UE) the time interval between transmissions of two successive data packets having different content.

9. Method according to a preceding claim, wherein the first (f1) and the second frequency range (f2) are allocated to a common basic frequency range (f0).

10. Method according to a preceding claim, wherein the user station (UE) carries out measurements of pilot signals (fp) of the further access device (NB*) in the first frequency range (f1) and signals measured received powers to the access device (NB).

11. Method according to Claim 10, wherein, for the signal transmission within the connection (V), the second frequency range (f2) is assigned to the user station (UE) for receiving a broadcasting channel (BCH) of the further access device (NB*).

12. Method according to Claim 11, wherein the access device (NB) signals to the user station (UE) the assignment of the second frequency range (f2) by means of measurement signaling (s*).

13. Access device (NB) of a radio communication system, having at least one transmitting and receiving device for transmitting and receiving signals within a connection (V) in a first frequency range (f1) on a radio interface to a user station (UE), and at least one control device for generating measurement signaling (s*) after receiving a need, signaled by the user station (UE), for carrying out measurements of signals of at least one further access device (NB*) in a second frequency range (f2) disjoint from the first frequency range (f1), wherein the measurement signaling (s*) indicates that transmissions of data packets (d) from the access device to the user station (UE) take place in the first frequency range (f1) over a limited period of time at one or more intervals from one another, which means that the user station (UE) can carry out measurements for resources of the second frequency range (f2) between the transmissions of the data packets (d), and wherein the measurement signaling (s*) contains a statement about the beginning and/or the end and/or the duration of a time interval (t*), and
for controlling the sending out of the measurement signaling (s*) to the user station (UE) by the transmitting and receiving device.

14. User station (UE) of a radio communication system, having at least one transmitting and receiving device for transmitting and receiving signals within a connection (V) in a first frequency range (f1) on a radio interface to an access device (NB) of the radio communication system, and at least one control device for signaling a need for carrying out measurements of signals and for carrying out measurements of at least one further access device (NB*) in a second frequency range (f2) disjoint from the first frequency range (f1), after receiving measurement signaling (s*), which is initiated by the signaling, from the access device (NB), wherein the measurement signaling (s*) indicates that transmissions of data packets (d) from the access device to the user station (UE) take place in the first frequency range (f1) over a limited period of time at one or more intervals from one another, which means that the user station (UE) can carry out measurements for resources of the second frequency range (f2) between the transmissions of the data packets (d), and wherein the measurement signaling (s*) contains a statement about the beginning and/or the end and/or the duration of a time interval (t*),
the user station (UE) being set up such that it can carry out measurements for resources of the second frequency range (f2) between the transmissions of the data packets (d).

15. Radio communication system having at least one access device (NB) according to Claim 13 and at least one user station (UE) according to Claim 14.

## Revendications

1. Procédé de préparation d'un transfert de communication dans un système de radiocommunication, une transmission de signal au sein d'une communication (V) sur une interface radioélectrique entre une station d'abonné (UE) et un dispositif d'accès (NB) étant effectuée exclusivement en mode paquets dans le système de radiocommunication,
procédé selon lequel
la station d'abonné (UE) signale au dispositif d'accès (NB) un besoin de réaliser des mesures des signaux,
le dispositif d'accès (NB), suite à la signalisation de la station d'abonné (UE), émet une signalisation de mesure (s*) à la station d'abonné (UE) qui indique que des transmissions de paquets de données (d) du dispositif d'accès à la station d'abonné (UE) ont lieu dans la première plage de fréquences (f1) pendant un intervalle de temps limité avec un ou plusieurs écarts les uns des autres, de telle sorte que la station d'abonné (UE), entre les transmissions de paquets de données (d), puisse effectuer des mesures sur les ressources de la deuxième plage de fréquences (f2), la signalisation de mesure (s*) contenant une indication du début et/ou de la fin et/ou de la durée d'un intervalle de temps (t*), et
la station d'abonné (UE), en se basant sur la signalisation de mesure (s*) reçue, pendant une réception de paquets de données (d) au sein de la communication (V) dans une première plage de fréquences (f1), réalise des mesures de signaux d'au moins un dispositif d'accès supplémentaire (NB*) dans une deuxième plage de fréquences (f2) disjointe de la première plage de fréquences (f1).

2. Procédé selon la revendication 1, les dispositifs d'accès (NB, NB*) étant respectivement associés à un même système de radiocommunication ou à des systèmes de radiocommunication différents.

3. Procédé selon la revendication 1 ou 2, selon lequel la station d'abonné (UE) réalise les mesures des signaux dans la deuxième plage de fréquences (f2) pendant une période limitée.

4. Procédé selon l'une des revendications précédentes, selon lequel la station d'abonné (UE) signale le besoin au dispositif d'accès (NB) au moyen d'une signalisation d'une qualité de réception mesurée, et le dispositif d'accès (NB) émet la signalisation de mesure (s*) à la station d'abonné (UE) en fonction du franchissement vers le bas d'une valeur de seuil prédéfinie de la qualité de réception.

5. Procédé selon l'une des revendications précédentes, selon lequel le dispositif d'accès (NB) après avoir émis la signalisation de mesure (s*) pendant une période limitée, des paquets de données (d) de la communication (V) sont transmis avec un intervalle de temps (t*) dimensionné pour la réalisation de des mesures.

6. Procédé selon la revendication 5, selon lequel le mode de planification de plage de temps de la station d'abonné (UE) est signalé au moyen d'un fanion indicateur (s°) associé aux paquets de données.

7. Procédé selon l'une des revendications précédentes, selon lequel un paquet de données (d) dans la première bande de fréquences (f1) est transmis par le dispositif d'accès (NB) en parallèle sur au moins deux sous-bandes de fréquences.

8. Procédé selon l'une des revendications précédentes, selon lequel le dispositif d'accès (NB) signale à la station d'abonné (UE) l'écart dans le temps entre les transmissions de deux paquets de données successifs ayant des contenus différents.

9. Procédé selon l'une des revendications précédentes, selon lequel la première (f1) et la deuxième plage de fréquences (f2) sont associées à une plage de fréquences de base commune (f0).

10. Procédé selon l'une des revendications précédentes, selon lequel la station d'abonné (UE) réalise (UE) des mesures de signaux pilotes (fp) du dispositif d'accès supplémentaire (NB*) dans la première plage de fréquences (f1) et signale les puissances de réception mesurées au dispositif d'accès (NB).

11. Procédé selon la revendication 10, selon lequel la deuxième plage de fréquences (f2) est attribuée à la station d'abonné (UE) pour la transmission de signal au sein de la communication (V) en vue de la réception d'un canal de diffusion (BCH) du dispositif d'accès supplémentaire (NB*).

12. Procédé selon la revendication 11, selon lequel le dispositif d'accès (NB) signale à la station d'abonné (UE) l'attribution de la deuxième plage de fréquences (f2) au moyen d'une signalisation de mesure (s*) .

13. Dispositif d'accès (NB) d'un système de radiocommunication, possédant au moins un dispositif d'émission et de réception destiné à émettre et à recevoir des signaux au sein d'une communication (V) dans une première plage de fréquences (f1) sur une interface radioélectrique vers une station d'abonné (UE), et au moins un dispositif de commande destiné à générer une signalisation de mesure (s*) après la réception d'un besoin signalé par la station d'abonné (UE) de réaliser des mesures des signaux d'au moins un dispositif d'accès supplémentaire (NB*) dans une deuxième plage de fréquences (f2) disjointe de la première plage de fréquences (f1) la signalisation de mesure (s*) indiquant que des transmissions de paquets de données (d) du dispositif d'accès à la station d'abonné (UE) ont lieu dans la première plage de fréquences (f1) pendant un intervalle de temps limité avec un ou plusieurs écarts les uns des autres, de telle sorte que la station d'abonné (UE), entre les transmissions de paquets de données (d), puisse effectuer des mesures sur les ressources de la deuxième plage de fréquences (f2), et la signalisation de mesure (s*) contenant une indication du début et/ou de la fin et/ou de la durée d'un intervalle de temps (t*), et destiné à commander l'émission de la signalisation de mesure (s*) vers la station d'abonné (UE) par le dispositif d'émission et de réception.

14. Station d'abonné (UE) d'un système de radiocommunication, possédant au moins un dispositif d'émission et de réception destiné à émettre et à recevoir des signaux au sein d'une communication (V) dans une première plage de fréquences (f1) sur une interface radioélectrique vers un dispositif d'accès (NB) du système de radiocommunication, et au moins un dispositif de commande destiné à signaler un besoin de réaliser des mesures des signaux et de réaliser des mesures d'au moins un dispositif d'accès supplémentaire (NB*) dans une deuxième plage de fréquences (f2) disjointe de la première plage de fréquences (f1) après la réception d'une signalisation de mesure (s*), qui est initiée par la signalisation, de la part du dispositif d'accès (NB), la signalisation de mesure (s*) indiquant que des transmissions de paquets de données (d) du dispositif d'accès à la station d'abonné (UE) ont lieu dans la première plage de fréquences (f1) pendant un intervalle de temps limité avec un ou plusieurs écarts les uns des autres, de telle sorte que la station d'abonné (UE), entre les transmissions de paquets de données (d), puisse effectuer des mesures sur les ressources de la deuxième plage de fréquences (f2), et la signalisation de mesure (s*) contenant une indication du début et/ou de la fin et/ou de la durée d'un intervalle de temps (t*),
la station d'abonné (UE) étant conçue de telle sorte qu'elle peut réaliser des mesures sur les ressources de la deuxième plage de fréquences (f2) entre les transmissions de paquets de données (d).

15. Système de radiocommunication, possédant au moins un dispositif d'accès (NB) selon la revendication 13 et au moins une station d'abonné (UE) selon la revendication 14.
